# EUROPEAN PATENT SPECIFICATION

(11) **EP 4 050 893 B1**
(45) Date of publication and mention of the grant of the patent: **25.11.2026**
(21) Application number: 21159072.4
(22) Date of filing: 24.02.2021
(51) Int. Cl.: H04N 7/18, B60R 1/00

(54) **A VIEW SUPPORT SYSTEM AT A VEHICLE FOR SUPPORTING A VEHICLE OCCUPANT TO SEE THE SURROUNDINGS OF THE VEHICLE**
SICHTUNTERSTÜTZUNGSSYSTEM AN EINEM FAHRZEUG ZUR UNTERSTÜTZUNG EINES FAHRZEUGINSASSEN BEIM SEHEN DER UMGEBUNG DES FAHRZEUGS
SYSTÈME D'AIDE À LA VISION DANS UN VÉHICULE POUR AIDER UN OCCUPANT DE VÉHICULE À VOIR L'ENVIRONNEMENT DU VÉHICULE

(43) Date of publication of application: 31.08.2022
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: EKELUND, Johan, 417 12 GÖTEBORG (SE); SHAFIABADY, Farshid, 422 48 GÖTEBORG (SE)
(74) Representative: Zacco Sweden AB

(56) References cited:
- WO-A1-2019/025590
- US-A1- 2005 206 511
- US-A1- 2019 381 936
- US-B1- 9 848 173

## Description

### Technical field

The present disclosure relates to a view support system at a vehicle for supporting a vehicle occupant to see the surroundings of the vehicle, a method for supporting a vehicle occupant to see the surroundings of a vehicle and a computer program product.

### Background art

Sometimes it is difficult for a vehicle occupant to see the surroundings of the vehicle. One reason may be that the window, that the vehicle occupants sees through, is not clean e.g. due to a substance onto the window, which can be anything from water, dust, mud, ice snow etc.

It is for example a well-known fact that when the windshield washer jets sprays water onto the window, this temporarily impedes the vehicle occupant's view of the road ahead. In many cases, activating the front windshield spray jets will completely block the view of the traffic ahead and can thus lead to an undesired situation. One consequence is that vehicle occupants tend to e.g. use the washer jets only when driving conditions are predicted to remain unchanged for the next couple of seconds. However, even under such conditions an unplanned sudden traffic action might occur that needs the attention from the vehicle occupant, so it remains important for the vehicle occupant to continue to be able to e.g. identify any object in front of vehicle even during the windshield washing event.

Further, there are also occasions when the vehicle occupant cannot even predict that the view of the surroundings of the vehicle will suddenly be blocked. For example when any substance, such as when a splash of mud, suddenly hits the window and blocks the view of the vehicle occupant. In such circumstances, it can be very difficult, if not impossible, to see the surroundings of the vehicle through the window.

WO2019025590A1 discloses a vehicle with windscreen having a display integrated in it, wherein the display displays images to the occupant acquired from a plurality of cameras in conditions where the driver cannot see clearly ahead of the vehicle, such as because of the windscreen being dirty, falling precipitation, or in circumstances of reduced visibility.

US2005206511A1 discloses activating windshield wipers and sprays depending on the detected condition of the windscreen.

US9848173B1 discloses the concept of detecting the windshield condition and taking visibility improving action accordingly.

US2019381936A1 also discloses a night vision camera which display or not the night vision camera images selectively.

### Summary

It is an object of the present disclosure to mitigate, alleviate or eliminate one or more of the above-identified deficiencies and disadvantages in the prior art and solve at least the above mentioned problem.

According to a first aspect there is provided a view support system at a vehicle for supporting a vehicle occupant to see the surroundings of the vehicle. The view support system comprises a first camera configured to obtain an image of the surroundings in a first direction of the vehicle, a display configured to display the image of the surroundings in the first direction of the vehicle obtained by the first camera and a processing circuitry operatively connected to the first camera and the display. The processing circuitry is configured to detect a signal indicative of an impaired visibility of the surroundings in a first direction through a vehicle window for the vehicle occupant of the vehicle and display the image of the surroundings in the first direction of the vehicle, obtained by the first camera at the display, to the vehicle occupant.

One advantage with this first aspect is that in the case of impaired visibility of the surroundings in the first direction through the vehicle window for the vehicle occupant, the vehicle occupant will be able to see the surroundings in the first direction at a display inside of the vehicle in order to e.g. detect an object that is in front of the vehicle and avoid an undesired traffic situation.

According to the first aspect, the view support system further comprises a washer spray activator configured to activate spraying of a liquid onto the vehicle window wherein the washer spray activator is operatively connected to the processing circuitry. The processing circuitry is further configured to determine if the washer spray activator is activated or inactivated and generate the signal to the processing circuitry indicative of an impaired visibility of the surroundings in the first direction through the vehicle window for the vehicle occupant of the vehicle, in accordance with that the washer spray activator is activated.

One advantage with this embodiment is that when the washer spray activator is activated, e.g. by the vehicle occupant to clean the window, the vehicle occupant will be able to see the surroundings in the first direction at a display inside of the vehicle in order to e.g. detect an object that is in front of the vehicle and avoid an undesired traffic situation.

According to some embodiments, the view support system further comprises a sensor configured to detect appearance of a substance onto the vehicle window that causes an impaired visibility of the surroundings in a first direction through the vehicle window for the vehicle occupant of the vehicle. The sensor is operatively connected to the processing circuitry, and the processing circuitry is further configured to determine if a substance appears onto the vehicle window and generate the signal to the processing circuitry indicative of an impaired visibility of the surroundings in a first direction through a vehicle window for the vehicle occupant of the vehicle in accordance with a determination that a substance appears onto the vehicle window.

One advantage with this embodiment is that when the sensor detects appearance of a substance onto the vehicle window that causes an impaired visibility of the surrounding, the vehicle occupant will be able to see the surroundings in the first direction at a display inside of the vehicle in order to e.g. detect an object that is in front of the vehicle and avoid an undesired traffic situation.

According to some embodiments, the processing circuitry is further configured to cease display of the image of the surroundings in the first direction of the vehicle, obtained by the first camera, to the vehicle occupant after a first predetermined time period in absence of detection of a signal indicative of an impaired visibility of the surroundings in the first direction through the vehicle window for the vehicle occupant of the vehicle.

One advantage with this embodiment is that the vehicle occupant will be able to see the surroundings in the first direction at a display for a predetermined time period even if there is no impaired visibility of the surroundings, but after the predetermined time period it can be desired to let the vehicle occupant to go back to see the surroundings in the first direction through the window.

According to some embodiments, the processing circuitry is further configured to cease display of the image of the surroundings in the first direction of the vehicle, obtained by the first camera, to the vehicle occupant in absence of detection of a signal indicative of an impaired visibility of the surroundings in the first direction through the vehicle window for the vehicle occupant of the vehicle.

One advantage with this embodiment is that it can be desired to let the vehicle occupant to go back to see the surroundings in the first direction through the window as soon as possible when it is determined that there is no impaired visibility of the surroundings.

According to some embodiments, the processing circuitry is further configured to initiate an image alert signal indicative of that an image of the surroundings in the first direction of the vehicle is displayed at the display.

One advantage with this embodiment is that the image alert signal makes the vehicle occupant aware of that an image of the surroundings in the first direction of the vehicle is displayed at the display inside of the vehicle, if it is difficult to see the surroundings in the first direction through the vehicle window.

According to some embodiments, the processing circuitry is further configured to initiate a remaining time signal indicative of the time the image of the surroundings in the first direction of the vehicle, obtained by the first camera will be displayed at the display.

One advantage with this embodiment is that the vehicle occupant can start prepare in due time for going back to see the surroundings in the first direction through the window instead of via the display, and not be taken by surprise when the display of the image of the surroundings in the first direction of the vehicle is ceased.

According to a second aspect there is provided a method for supporting a vehicle occupant to see the surroundings of a vehicle. The method comprising detecting a signal indicative of an impaired visibility of the surroundings in a first direction through a vehicle window for the vehicle occupant of the vehicle, and displaying an image of the surroundings in the first direction of the vehicle, obtained by a first camera at a display, to the vehicle occupant.

One advantage with this second aspect is that in the case of impaired visibility of the surroundings in the first direction through the vehicle window for the vehicle occupant, the vehicle occupant will be able to see the surroundings in the first direction at a display inside of the vehicle in order to e.g. detect an object that is in front of the vehicle and avoid an undesired traffic situation.

According to the second aspect, the method further comprises determining if a washer spray activator is activated or inactivated, and generating the signal to the processing circuitry indicative of an impaired visibility of the surroundings in the first direction through the vehicle window for the vehicle occupant of the vehicle, in accordance with that the washer spray activator is activated.

One advantage with this embodiment is that when the washer spray activator is activated, e.g. by the vehicle occupant to clean the window, the vehicle occupant will be able to see the surroundings in the first direction at a display inside of the vehicle in order to e.g. detect an object that is in front of the vehicle and avoid an undesired traffic situation.

According to some embodiments, the method further comprises determining if a substance appears onto the vehicle window and generating the signal to the processing circuitry indicative of an impaired visibility of the surroundings in a first direction through a vehicle window for the vehicle occupant of the vehicle in accordance with a determination that a substance appears onto the vehicle window.

One advantage with this embodiment is that when the sensor detects appearance of a substance onto the vehicle window that causes an impaired visibility of the surrounding, the vehicle occupant will be able to see the surroundings in the first direction at a display inside of the vehicle in order to e.g. detect an object that is in front of the vehicle and avoid an undesired traffic situation.

According to some embodiments, the method further comprises ceasing display of the image of the surroundings in the first direction of the vehicle, obtained by the first camera, to the vehicle occupant after a first predetermined time period in absence of detection of a signal indicative of an impaired visibility of the surroundings in the first direction through the vehicle window for the vehicle occupant of the vehicle.

One advantage with this embodiment is that the vehicle occupant will be able to see the surroundings in the first direction at a display for a predetermined time period even if there is no impaired visibility of the surroundings, but after the predetermined time period it can be desired to let the vehicle occupant to go back to see the surroundings in the first direction through the window.

According to some embodiments, the method further comprises ceasing display of the image of the surroundings in the first direction of the vehicle, obtained by the first camera, to the vehicle occupant in absence of detection of a signal indicative of an impaired visibility of the surroundings in the first direction through the vehicle window for the vehicle occupant of the vehicle.

One advantage with this embodiment is that it can be desired to let the vehicle occupant to go back to see the surroundings in the first direction through the window as soon as possible when it is determined that there is no impaired visibility of the surroundings.

According to some embodiments, the method further comprises initiating an image alert signal indicative of that an image of the surroundings in the first direction of the vehicle is displayed at the display.

One advantage with this embodiment is that the image alert signal makes the vehicle occupant aware of that an image of the surroundings in the first direction of the vehicle is displayed at the display inside of the vehicle, if it is difficult to see the surroundings in the first direction through the vehicle window.

According to some embodiments, the method further comprises initiating a remaining time signal indicative of the time the image of the surroundings in the first direction of the vehicle, obtained by the first camera will be displayed at the display.

One advantage with this embodiment is that the vehicle occupant can start prepare in due time for going back to see the surroundings in the first direction through the window instead of via the display, and not be taken by surprise when the display of the image of the surroundings in the first direction of the vehicle is ceased.

According to a third aspect there is provided a computer program product comprising a non-transitory computer readable medium, having thereon a computer program comprising program instructions, the computer program being loadable into a processing circuitry and configured to cause execution of the method when the computer program is run by the at least one processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an example view support system from the inside of a vehicle according to an embodiment of the present disclosure.
Figure 2 illustrates an example view support system from the inside of a vehicle according to an embodiment of the present disclosure.
Figure 3 illustrates a flow chart of the method steps according to the second aspect of the disclosure.
Figure 4 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

It is sometimes difficult for a vehicle occupant to see the surroundings of the vehicle. One reason may be that the window, that the vehicle occupants sees through, is not clean e.g. due to a substance onto the window, which can be anything from water, slush, ice, snow to dust, mud, sand, leafs, etc. Further, the windshield washer jets sprays water onto the window, this also temporarily impedes the vehicle occupant's view of the road ahead.

There may also be occasions when the vehicle occupant cannot even predict that impaired visibility of the surroundings will occur, for example when any substance, such as a splash of mud, or e.g. snow from a nearby truck suddenly hits the window and impairs the visibility of the surroundings for the vehicle occupant.

It is an object of the present disclosure to mitigate, alleviate or eliminate one or more of the above-identified deficiencies and disadvantages in the prior art and solve at least the above mentioned problem.

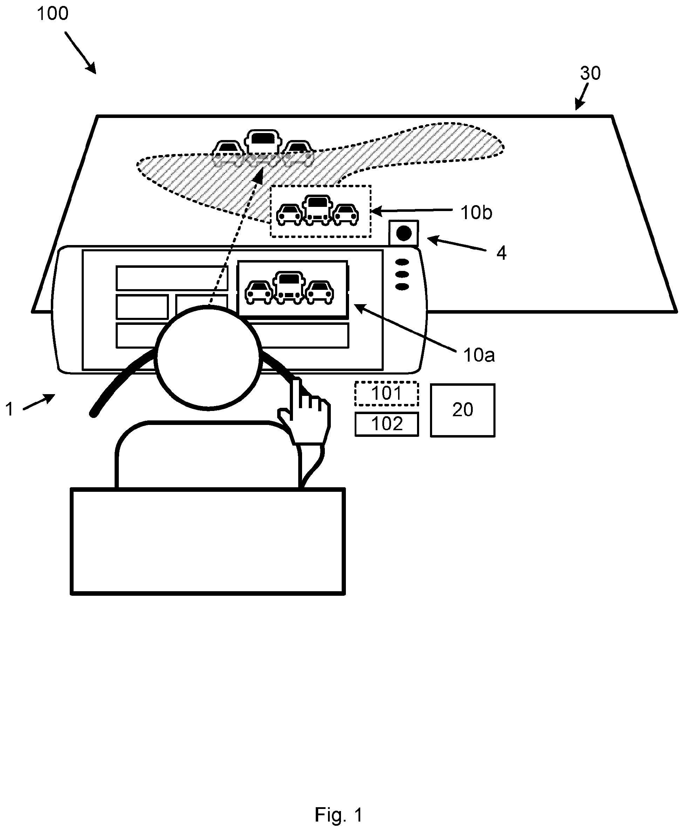

The first aspect of this disclosure shows a view support system 100 at a vehicle 1 for supporting a vehicle occupant to see the surroundings of the vehicle 1. Figure 1 illustrates an example view support system from the inside of a vehicle according to an embodiment of the present disclosure. In the illustration in Figure 1 the vehicle occupant tries to see the surroundings in a first direction of the vehicle 1, illustrated by an arrow from the vehicle occupant to the traffic ahead, illustrated by three vehicles.

The view support system 100 comprises a first camera 5a configured to obtain an image of the surroundings in a first direction of the vehicle 1. According to some embodiments the camera 5a is arranged at the vehicle 1 to obtain images of the surroundings of the vehicle 1 that corresponds to the view that a vehicle occupant can see when looking out of the windshield window.

According to some embodiments the first camera 5a is arranged at the outside of the vehicle 1. According to some embodiments the first camera 5a is arranged offset to a window of the vehicle. According to some embodiments the camera 5a is a camera installed at a predetermined camera position. In the example as illustrated in Figure 1 the camera 5a is a camera installed at a predetermined camera position in the front part of the vehicle. In an example, existing cameras at different camera positions at a vehicle are used as the camera 5a for the view support system 100.

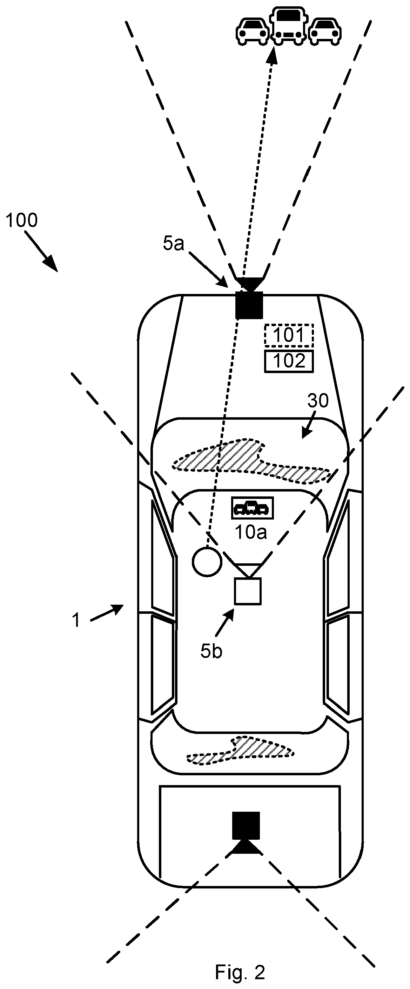

According to some embodiments the first camera 5a is configured to obtain an image of the surroundings in front of the vehicle 1. According to some embodiments the first camera 5a is configured to obtain an image of the surroundings behind the vehicle 1, as illustrated in Figure 2.

According to some embodiments the first camera 5a is one of a plural cameras arranged at the vehicle configured to obtain images of the surroundings in plural directions around the vehicle 1.

According to some embodiments the first camera 5a is configured to obtain a stream of images of the surroundings in a first direction of the vehicle 1. According to some embodiments the first camera 5a is configured to stream a live video feed of images of the surroundings in a first direction of the vehicle 1.

The view support system 100 further comprises a display 10a,10b configured to display the image of the surroundings in the first direction of the vehicle 1 obtained by the first camera 5a.

According to some embodiments the display 10a,10b is arranged in front of the vehicle occupant in the vicinity of a window 30 inside of the vehicle 1. According to some embodiments the display 10a, 10b is a driver information module display. In the example as illustrated in Figure 1, the display is a dashboard display 10a. In an example the display 10a, 10b is used for other applications in the vehicle 1. According to some embodiments the display is a head up display 10b. In the example as illustrated in Figure 1, the display is a head up display 10b, projected at the window 30 in front of the vehicle occupant.

According to some embodiments at least any of the first camera 5a and the display 10a,10b is connectable to the view support system 100 via a wireless communication network. According to some embodiments the first camera 5a is arranged at a nearby vehicle, and wirelessly connected to the to the view support system 100 of the vehicle 1 via a wireless communication network. According to some embodiments the view support system 100 of the vehicle 1 is connected to a view support system of the nearby vehicle.

The view support system 100 comprises a processing circuitry 102 operatively connected to the first camera 5a and the display 10a,10b. According to some embodiments the processing circuitry 102 is the processing circuitry of an on-board vehicle computer. According to some embodiments the processing circuitry is comprised in an electronic device connectable to the view support system 100 via a wireless communication network.

According to some embodiments the view support system 100 further comprises a memory 101 configured to store data. According to some embodiments the memory 101 is the memory of an on-board vehicle computer. According to some embodiments the memory is comprised in an electronic device connectable to the view support system 100 via a wireless communication network.

The processing circuitry 102 is configured to detect a signal indicative of an impaired visibility of the surroundings in a first direction through a vehicle window 30 for the vehicle occupant of the vehicle 1, and display the image of the surroundings in the first direction of the vehicle 1, obtained by the first camera 5a at the display 10a,10b, to the vehicle occupant.

According to some embodiments the signal indicative of an impaired visibility of the surroundings in a first direction through a vehicle window 30 for the vehicle occupant of the vehicle 1, is detected via a vehicle internal communications network. According to some embodiments the processing circuitry 102 is connected to the vehicle internal communications network of the vehicle 1. According to some embodiments the vehicle internal communications network is any of a vehicle bus, an Internal communications network, a controller area network, CAN or a Local Interconnect Network, LIN.

One advantage with this first aspect is that in the case of impaired visibility of the surroundings in the first direction through the vehicle window 30 for the vehicle occupant, the vehicle occupant will be able to see the surroundings in the first direction at the display 10a, 10b inside of the vehicle 1 in order to e.g. detect an object that is in front of the vehicle and avoid an undesired traffic situation.

In the example as illustrated in Figures 1 and 2, the vehicle occupant will be able to see the surroundings in front of the vehicle 1 at the display 10a, 10b arranged inside of the vehicle 1 that displays images, e.g. a streaming video feed, from the first camera 5a that is arranged at the outside of the vehicle and hence independent of if there is an impaired visibility of the surroundings in a first direction through a vehicle window 30 for the vehicle occupant of the vehicle 1.

According to some embodiments the view support system 100 comprises a first camera 5a configured to obtain an image of the surroundings in a second direction of the vehicle 1, and the display 10a,10b is configured to display the image of the surroundings in the second direction of the vehicle 1 obtained by the first camera 5a, wherein the processing circuitry 102 is further configured to detect a signal indicative of an impaired visibility of the surroundings in a second direction through a vehicle window for the vehicle occupant of the vehicle 1, and display the image of the surroundings in the second direction of the vehicle 1, obtained by the first camera 5a at the display 10a,10b to the vehicle occupant.

According to some embodiments the view support system 100 comprises plural first cameras, each arranged at the vehicle configured to obtain an image of the surroundings in a plural directions of the vehicle 1 and the display 10a,10b is configured to display the image of the surroundings in the plural directions of the vehicle 1 obtained by the plural first cameras.

According to some embodiments the view support system 100 further comprises a washer spray activator 20 configured to activate spraying of a liquid onto the vehicle window 30. According to some embodiments the washer spray activator 20 is configured to be manually activated by the vehicle occupant. In an example the vehicle occupant can manually activate the washer spray activator 20 by pulling a lever close to the steering wheel of the vehicle 1. According to some embodiments the washer spray activator 20 is activated by a switch. According to some embodiments the washer spray activator 20 is activated by the vehicle occupant and maintains activated as long as the vehicle occupant maintains a switch in an activation position and is deactivated with the vehicle occupant cease maintaining the switch in the activation position.

The washer spray activator 20 is operatively connected to the processing circuitry 102, and the processing circuitry 102 is further configured to determine if the washer spray activator 20 is activated or inactivated, and generate the signal to the processing circuitry 102 indicative of an impaired visibility of the surroundings in the first direction through the vehicle window 30 for the vehicle occupant of the vehicle 1, in accordance with that the washer spray activator 20 is activated.

One advantage with this embodiment is that when the washer spray activator 20 is activated, e.g. by the vehicle occupant to clean the window 30, the vehicle occupant will be able to see the surroundings in the first direction at the display 10a, 10b inside of the vehicle 1 in order to e.g. detect an object that is in front of the vehicle 1 and avoid an undesired traffic situation. Hence, by activating the display 10a, 10b that streams a view that is not obscured by water and washer fluid, the vehicle occupant can look at the display 10a, 10b while the cleaning of the windshield finish.

According to some embodiments the view support system 100 further comprises a sensor 4 configured to detect appearance of a substance onto the vehicle window 30 that causes an impaired visibility of the surroundings in a first direction through the vehicle window 30 for the vehicle occupant of the vehicle 1.

According to some embodiments the sensor 4 is arranged at the vehicle 30 configured to detect appearance of a substance onto the vehicle window 30. According to some embodiments the sensor 4 is arranged at the vehicle 30 configured to detect appearance of a substance onto the vehicle window 30 that causes an impaired visibility of the surroundings in a first direction through the vehicle window 30 for the vehicle occupant of the vehicle 1.

According to some embodiments the sensor 4 is an image sensor configured to detect appearance of a substance onto the vehicle window 30. According to some embodiments the sensor 4 is an image sensor configured to detect appearance of a substance onto the vehicle window 30 using image processing. According to some embodiments the sensor 4 is an infrared sensor. According to some embodiments the sensor 4 is thermal sensor. According to some embodiments the sensor 4 is a Light Detection and Ranging, LIDAR, sensor. According to some embodiments the sensor 4 is a Radio Detection and Ranging, RADAR, sensor. According to some embodiments the sensor 4 is a rain sensor configured to detect rain onto the vehicle window 30. According to some embodiments the sensor is at least any of a capacitive or resistive arrangement at the window 30 configured to detect appearance of a substance onto the vehicle window 30 using at least any of capacitive or resistive measurements. According to some embodiments the sensor 4 is a touch sensitive surface configured to detect appearance of a substance onto the vehicle window 30.

According to some embodiments the sensor 4 is a second camera 5b arranged inside of the vehicle 1 configured to detect appearance of a substance onto the vehicle window 30. Figure 2 illustrates an example of a second camera 5b arranged inside of the vehicle 1 configured to detect appearance of a substance onto the vehicle window 30. According to some embodiments, as illustrated in Figure 2, the camera 5b is arranged to detect appearance of a substance onto the vehicle window 30 that causes an impaired visibility of the surroundings in front of the vehicle for the vehicle occupant of the vehicle 1.

The sensor 4 is operatively connected to the processing circuitry 102, and the processing circuitry 102 is further configured to determine if a substance appears onto the vehicle window 30, and generate the signal to the processing circuitry 102 indicative of an impaired visibility of the surroundings in a first direction through a vehicle window 30 for the vehicle occupant of the vehicle 1 in accordance with a determination that a substance appears onto the vehicle window 30.

One advantage with this embodiment is that when the sensor detects appearance of a substance onto the vehicle window that causes an impaired visibility of the surrounding, the vehicle occupant will be able to see the surroundings in the first direction at a display inside of the vehicle in order to e.g. detect an object that is in front of the vehicle and avoid an undesired traffic situation.

According to some embodiments the washer spray activator 20 configured to be automatically operable by the processing circuitry 102. According to some embodiments the processing circuitry 102 is further configured to activate the washer spray activator 20 in accordance with a determination that a substance appears onto the vehicle window 30.

According to some embodiments the view support system 100 further comprises a lens cleaner arranged at the camera 5a. According to some embodiments the lens cleaner is operatively connected to the processing circuitry 102. According to some embodiments the processing circuitry 102 is further configured to automatically activate the lens cleaner for cleaning of a lens of the camera 5a in accordance with a determination that that the sensor 4 detects appearance of a substance onto the vehicle window 30.

According to some embodiments the processing circuitry 102 is further configured to cease display of the image of the surroundings in the first direction of the vehicle 1, obtained by the first camera 5a, to the vehicle occupant after a first predetermined time period t1 in absence of detection of a signal indicative of an impaired visibility of the surroundings in the first direction through the vehicle window 30 for the vehicle occupant of the vehicle 1.

One advantage with this embodiment is that the vehicle occupant will be able to see the surroundings in the first direction at the display 10a, 10b for a predetermined time period even if there is no impaired visibility of the surroundings, but after the predetermined time period it can be desired to let the vehicle occupant to go back to see the surroundings in the first direction through the window. In an example it is desirable to force the vehicle occupant to not look at the display 10a, 10b, more than a certain time, but instead focus on the surroundings in the first direction through the window after a certain time. According to some embodiments the predetermined time period t1 can be adjusted by the vehicle occupant. According to some embodiments the predetermined time period t1 can be adjusted by the vehicle occupant in real time. According to some embodiments the predetermined time period t1 is dependent on activation of a windshield wiper.

According to some embodiments the processing circuitry 102 is further configured to cease display of the image of the surroundings in the first direction of the vehicle 1, obtained by the first camera 5a, to the vehicle occupant in absence of detection of a signal indicative of an impaired visibility of the surroundings in the first direction through the vehicle window 30 for the vehicle occupant of the vehicle 1.

One advantage with this embodiment is that it can be desired to let the vehicle occupant to go back to see the surroundings in the first direction through the window as soon as possible when it is determined that there is no impaired visibility of the surroundings. In an example it is desirable to force the vehicle occupant to not look at the display 10a, 10b, but instead focus on the surroundings in the first direction through the window as soon as possible.

According to some embodiments the processing circuitry 102 is further configured to initiate an image alert signal indicative of that an image of the surroundings in the first direction of the vehicle 1 is displayed at the display 10a,10b.

According to some embodiments the alert signal is any of a visual signal, a tactile signal or a sound signal. According to some embodiments the alert signal is a visible icon in a head up display. According to some embodiments the alert signal is a voice signal. According to some embodiments the voice signal instructs the vehicle to focus on the display.

One advantage with this embodiment is that the image alert signal makes the vehicle occupant aware of that an image of the surroundings in the first direction of the vehicle is displayed at the display inside of the vehicle, if it is difficult to see the surroundings in the first direction through the vehicle window.

According to some embodiments the processing circuitry 102 is further configured to initiate a remaining time signal indicative of the time the image of the surroundings in the first direction of the vehicle 1, obtained by the first camera 5a will be displayed at the display 10a,10b.

According to some embodiments the remaining time signal is any of a visual signal, a tactile signal or a sound signal.

According to some embodiments the remaining time signal is a visible graphical indication that changes dynamically dependent on time the image of the surroundings in the first direction of the vehicle 1, obtained by the first camera 5a will be displayed at the display 10a,10b. In an example the graphical indication is in form of a shrinking bar, a time glass or a counter. According to some embodiments the remaining time signal is a sound that changes dynamically dependent on time the image of the surroundings in the first direction of the vehicle 1, obtained by the first camera 5a will be displayed at the display 10a,10b. In an example the sound is changing in amplitude and or frequency.

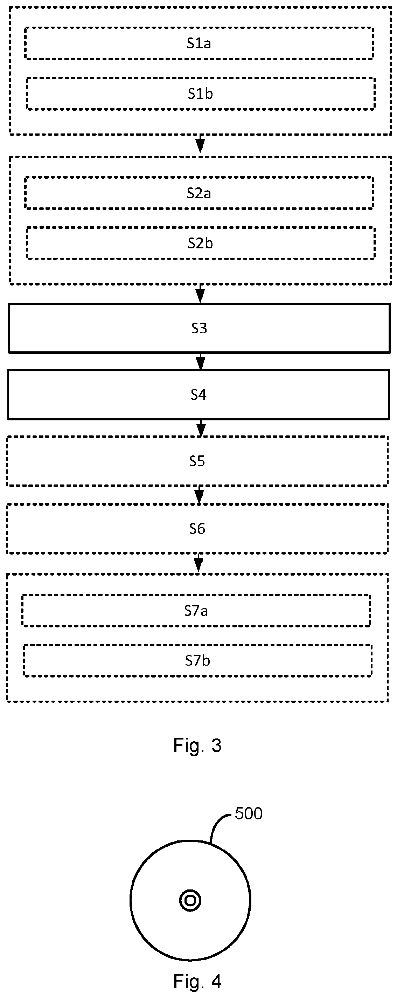

The second aspect of this disclosure shows a method for supporting a vehicle occupant to see the surroundings of a vehicle 1. Figure 3 illustrates a flow chart of the method steps according to the second aspect of the disclosure.

The method comprising the step of S3 detecting a signal indicative of an impaired visibility of the surroundings in a first direction through a vehicle window 30 for the vehicle occupant of the vehicle 1, and the step of S4 displaying an image of the surroundings in the first direction of the vehicle 1, obtained by a first camera 5a at a display 10a,10b, to the vehicle occupant.

One advantage with this second aspect is that in the case of impaired visibility of the surroundings in the first direction through the vehicle window for the vehicle occupant, the vehicle occupant will be able to see the surroundings in the first direction at a display inside of the vehicle in order to e.g. detect an object that is in front of the vehicle and avoid an undesired traffic situation.

According to some embodiments the method further comprises the step of S1a determining if a washer spray activator 20 is activated or inactivated, and the step of S2a generating the signal to the processing circuitry 102 indicative of an impaired visibility of the surroundings in the first direction through the vehicle window 30 for the vehicle occupant of the vehicle 1, in accordance with that the washer spray activator 20 is activated.

One advantage with this embodiment is that when the washer spray activator is activated, e.g. by the vehicle occupant to clean the window, the vehicle occupant will be able to see the surroundings in the first direction at a display inside of the vehicle in order to e.g. detect an object that is in front of the vehicle and avoid an undesired traffic situation.

According to some embodiments the method further comprises the step of S1b determining if a substance appears onto the vehicle window 30, and the step of S2b generating the signal to the processing circuitry 102 indicative of an impaired visibility of the surroundings in a first direction through a vehicle window 30 for the vehicle occupant of the vehicle 1 in accordance with a determination that a substance appears onto the vehicle window 30.

One advantage with this embodiment is that when the sensor detects appearance of a substance onto the vehicle window that causes an impaired visibility of the surrounding, the vehicle occupant will be able to see the surroundings in the first direction at a display inside of the vehicle in order to e.g. detect an object that is in front of the vehicle and avoid an undesired traffic situation.

According to some embodiments the method further comprises the step of S7a ceasing display of the image of the surroundings in the first direction of the vehicle 1, obtained by the first camera 5a, to the vehicle occupant after a first predetermined time period t1 in absence of detection of a signal indicative of an impaired visibility of the surroundings in the first direction through the vehicle window 30 for the vehicle occupant of the vehicle 1.

One advantage with this embodiment is that the vehicle occupant will be able to see the surroundings in the first direction at a display for a predetermined time period even if there is no impaired visibility of the surroundings, but after the predetermined time period it can be desired to let the vehicle occupant to go back to see the surroundings in the first direction through the window.

According to some embodiments the method further comprises the step of S7b ceasing display of the image of the surroundings in the first direction of the vehicle 1, obtained by the first camera 5a, to the vehicle occupant in absence of detection of a signal indicative of an impaired visibility of the surroundings in the first direction through the vehicle window 30 for the vehicle occupant of the vehicle 1.

One advantage with this embodiment is that it can be desired to let the vehicle occupant to go back to see the surroundings in the first direction through the window as soon as possible when it is determined that there is no impaired visibility of the surroundings.

According to some embodiments the method further comprises the step of S5 initiating an image alert signal indicative of that an image of the surroundings in the first direction of the vehicle 1 is displayed at the display 10a,10b.

One advantage with this embodiment is that the image alert signal makes the vehicle occupant aware of that an image of the surroundings in the first direction of the vehicle is displayed at the display inside of the vehicle, if it is difficult to see the surroundings in the first direction through the vehicle window.

According to some embodiments the method further comprises the step of S6 initiating a remaining time signal indicative of the time the image of the surroundings in the first direction of the vehicle 1, obtained by the first camera 5a will be displayed at the display 10a,10b.

One advantage with this embodiment is that the vehicle occupant can start prepare in due time for going back to see the surroundings in the first direction through the window instead of via the display, and not be taken by surprise when the display of the image of the surroundings in the first direction of the vehicle is ceased.

The third aspect of this disclosure shows a computer program product the second aspect comprising a non-transitory computer readable medium, having thereon a computer program comprising program instructions, the computer program being loadable into a processing circuitry 102 and configured to cause execution of the method when the computer program is run by the at least one processing circuitry 102.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A view support system (100) at a vehicle (1) for supporting a vehicle occupant to see the surroundings of the vehicle (1), the view support system (100) comprises:
a first camera (5a) configured to obtain an image of the surroundings in a first direction of the vehicle (1);
a display (10a,10b) configured to display the image of the surroundings in the first direction of the vehicle (1) obtained by the first camera (5a);
a washer spray activator (20) configured to activate spraying of a liquid onto the vehicle window (30); and
a processing circuitry (102) operatively connected to the first camera (5a), the display (10a,10b) and the washer spray activator (20), the processing circuitry (102) is configured to:
- determine if the washer spray activator (20) is activated or inactivated;
- generate a signal to the processing circuitry (102) indicative of an impaired visibility of the surroundings in the first direction through the vehicle window (30) for the vehicle occupant of the vehicle (1) in accordance with that the washer spray activator (20) is activated;
- detect the signal indicative of an impaired visibility of the surroundings in a first direction through a vehicle window (30) for the vehicle occupant of the vehicle (1); and
- display the image of the surroundings in the first direction of the vehicle (1), obtained by the first camera (5a) at the display (10a,10b), to the vehicle occupant.

2. The view support system (100) according to claim 1, wherein the view support system (100) further comprises:
a sensor (4) configured to detect appearance of a substance onto the vehicle window (30) that causes an impaired visibility of the surroundings in a first direction through the vehicle window (30) for the vehicle occupant of the vehicle (1), wherein the sensor (4) is operatively connected to the processing circuitry (102), and the processing circuitry (102) is further configured to:
- determine if a substance appears onto the vehicle window (30); and
- generate the signal to the processing circuitry (102) indicative of an impaired visibility of the surroundings in a first direction through a vehicle window (30) for the vehicle occupant of the vehicle (1) in accordance with a determination that a substance appears onto the vehicle window (30).

3. The view support system (100) according to any of the preceding claims, wherein the processing circuitry (102) is further configured to:
- cease display of the image of the surroundings in the first direction of the vehicle (1), obtained by the first camera (5a), to the vehicle occupant after a first predetermined time period (t1) in absence of detection of a signal indicative of an impaired visibility of the surroundings in the first direction through the vehicle window (30) for the vehicle occupant of the vehicle (1).

4. The view support system (100) any of the preceding claims, wherein the processing circuitry (102) is further configured to:
- cease display of the image of the surroundings in the first direction of the vehicle (1), obtained by the first camera (5a), to the vehicle occupant in absence of detection of a signal indicative of an impaired visibility of the surroundings in the first direction through the vehicle window (30) for the vehicle occupant of the vehicle (1).

5. The view support system (100) according to any of the preceding claims, wherein the processing circuitry (102) is further configured to:
- initiate an image alert signal indicative of that an image of the surroundings in the first direction of the vehicle (1) is displayed at the display (10a,10b).

6. The view support system (100) according to any of the preceding claims, wherein the processing circuitry (102) is further configured to:
- initiate a remaining time signal indicative of the time the image of the surroundings in the first direction of the vehicle (1), obtained by the first camera (5a) will be displayed at the display (10a,10b).

7. A method for supporting a vehicle occupant to see the surroundings of a vehicle (1), the method comprising:
- (S1a) determining if a washer spray activator (20) is activated or inactivated;
- (S2a) generating a signal to the processing circuitry (102) indicative of an impaired visibility of the surroundings in the first direction through the vehicle window (30) for the vehicle occupant of the vehicle (1), in accordance with that the washer spray activator (20) is activated;
(S3) detecting the signal indicative of an impaired visibility of the surroundings in a first direction through a vehicle window (30) for the vehicle occupant of the vehicle (1); and
- (S4) displaying an image of the surroundings in the first direction of the vehicle (1), obtained by a first camera (5a) at a display (10a,10b), to the vehicle occupant.

8. The method according to any of the claim 7, the method further comprising:
- (S1b) determining if a substance appears onto the vehicle window (30); and
- (S2b) generating the signal to the processing circuitry (102) indicative of an impaired visibility of the surroundings in a first direction through a vehicle window (30) for the vehicle occupant of the vehicle (1) in accordance with a determination that a substance appears onto the vehicle window (30).

9. The method according to any of the claims 7-8, the method further comprising:
- (S7a) ceasing display of the image of the surroundings in the first direction of the vehicle (1), obtained by the first camera (5a), to the vehicle occupant after a first predetermined time period (t1) in absence of detection of a signal indicative of an impaired visibility of the surroundings in the first direction through the vehicle window (30) for the vehicle occupant of the vehicle (1).

10. The method according to any of the claims 7-9, the method further comprising:
- (S7b) ceasing display of the image of the surroundings in the first direction of the vehicle (1), obtained by the first camera (5a), to the vehicle occupant in absence of detection of a signal indicative of an impaired visibility of the surroundings in the first direction through the vehicle window (30) for the vehicle occupant of the vehicle (1).

11. The method according to any of the claims 7-10, the method further comprising:
- (S5) initiating an image alert signal indicative of that an image of the surroundings in the first direction of the vehicle (1) is displayed at the display (10a,10b).

12. The method according to any of the claims 7-11, the method further comprising:
- (S6) initiating a remaining time signal indicative of the time the image of the surroundings in the first direction of the vehicle (1), obtained by the first camera (5a) will be displayed at the display (10a,10b).

13. A computer program product (500) comprising a non-transitory computer readable medium, having thereon a computer program comprising program instructions, the computer program being loadable into a processing circuitry (102) and configured to cause execution of the method according to any of claims 7 through 12 when the computer program is run by the at least one processing circuitry (102).

## Patentansprüche

1. Sichtunterstützungssystem (100) an einem Fahrzeug (1) zum Unterstützen eines Fahrzeuginsassen beim Sehen der Umgebung des Fahrzeugs (1), wobei das Sichtunterstützungssystem (100) Folgendes umfasst:
eine erste Kamera (5a), die dazu konfiguriert ist, ein Bild der Umgebung in einer ersten Richtung des Fahrzeugs (1) zu erlangen;
eine Anzeige (10a, 10b), die dazu konfiguriert ist, das Bild der Umgebung in der ersten Richtung des Fahrzeugs (1), das durch die erste Kamera (5a) erlangt wird, anzuzeigen;
einen Scheibenwischersprühaktivator (20), der dazu konfiguriert ist, Sprühen einer Flüssigkeit auf die Fahrzeugfensterscheibe (30) zu aktivieren; und
eine Verarbeitungsschaltung (102), die mit der ersten Kamera (5a), der Anzeige (10a, 10b) und dem Scheibenwischersprühaktivator (20) wirkverbunden ist, wobei die Verarbeitungsschaltung (102) zu Folgendem konfiguriert ist:
- Bestimmen, ob der Scheibenwischersprühaktivator (20) aktiviert oder inaktiviert ist;
- Generieren eines Signals für die Verarbeitungsschaltung (102), das eine beeinträchtigte Sichtbarkeit der Umgebung in der ersten Richtung durch das Fahrzeugfenster (30) für den Fahrzeuginsassen des Fahrzeugs (1) angibt, in Übereinstimmung damit, dass der Scheibenwischersprühaktivator (20) aktiviert ist;
- Detektieren des Signals, das eine beeinträchtigte Sichtbarkeit der Umgebung in einer ersten Richtung durch ein Fahrzeugfenster (30) für den Fahrzeuginsassen des Fahrzeugs (1) angibt; und
- Anzeigen des Bilds der Umgebung in der ersten Richtung des Fahrzeugs (1), das durch die erste Kamera (5a) erlangt wird, auf der Anzeige (10a, 10b) für den Fahrzeuginsassen.

2. Sichtunterstützungssystem (100) nach Anspruch 1, wobei das Sichtunterstützungssystem (100) ferner Folgendes umfasst:
einen Sensor (4), der dazu konfiguriert ist, ein Auftreten einer Substanz auf dem Fahrzeugfenster (30), die eine beeinträchtigte Sichtbarkeit der Umgebung in einer ersten Richtung durch das Fahrzeugfenster (30) für den Fahrzeuginsassen des Fahrzeugs (1) verursacht, zu detektieren, wobei der Sensor (4) mit der Verarbeitungsschaltung (102) wirkverbunden ist und die Verarbeitungsschaltung (102) ferner zu Folgendem konfiguriert ist:
- Bestimmen, ob eine Substanz auf dem Fahrzeugfenster (30) auftritt; und
- Generieren des Signals, das eine beeinträchtigte Sichtbarkeit der Umgebung in einer ersten Richtung durch ein Fahrzeugfenster (30) für den Fahrzeuginsassen des Fahrzeugs (1) angibt, für die Verarbeitungsschaltung (102) in Übereinstimmung mit einer Bestimmung, dass eine Substanz auf dem Fahrzeugfenster (30) auftritt.

3. Sichtunterstützungssystem (100) nach einem der vorhergehenden Ansprüche, wobei die Verarbeitungsschaltung (102) ferner zu Folgendem konfiguriert ist:
- Beenden der Anzeige des Bilds der Umgebung in der ersten Richtung des Fahrzeugs (1), das durch die erste Kamera (5a) erlangt wird, für den Fahrzeuginsassen nach einer ersten vorbestimmten Zeitdauer (t1) bei Ausbleiben von Detektion eines Signals, das eine beeinträchtigte Sichtbarkeit der Umgebung in der ersten Richtung durch das Fahrzeugfenster (30) für den Fahrzeuginsassen des Fahrzeugs (1) angibt.

4. Sichtunterstützungssystem (100) einer der vorhergehenden Ansprüche, wobei die Verarbeitungsschaltung (102) ferner zu Folgendem konfiguriert ist:
- Beenden der Anzeige des Bilds der Umgebung in der ersten Richtung des Fahrzeugs (1), das durch die erste Kamera (5a) erlangt wird, für den Fahrzeuginsassen bei Ausbleiben von Detektion eines Signals, das eine beeinträchtigte Sichtbarkeit der Umgebung in der ersten Richtung durch das Fahrzeugfenster (30) für den Fahrzeuginsassen des Fahrzeugs (1) angibt.

5. Sichtunterstützungssystem (100) nach einem der vorhergehenden Ansprüche, wobei die Verarbeitungsschaltung (102) ferner zu Folgendem konfiguriert ist:
- Initiieren eines Bildalarmsignals, das angibt, das ein Bild der Umgebung in der ersten Richtung des Fahrzeugs (1) auf der Anzeige (10a, 10b) angezeigt wird.

6. Sichtunterstützungssystem (100) nach einem der vorhergehenden Ansprüche, wobei die Verarbeitungsschaltung (102) ferner zu Folgendem konfiguriert ist:
- Initiieren eines Signals für verbleibende Zeit, das die Zeit angibt, für die das Bild der Umgebung in der ersten Richtung des Fahrzeugs (1), das durch die erste Kamera (5a) erlangt wird, auf der Anzeige (10a, 10b) angezeigt werden wird.

7. Verfahren zum Unterstützen eines Fahrzeuginsassen beim Sehen der Umgebung eines Fahrzeugs (1), wobei das Verfahren Folgendes umfasst:
- (S1a) Bestimmen, ob ein Scheibenwischersprühaktivator (20) aktiviert oder inaktiviert ist;
- (S2a) Generieren eines Signals für die Verarbeitungsschaltung (102), das eine beeinträchtigte Sichtbarkeit der Umgebung in der ersten Richtung durch das Fahrzeugfenster (30) für den Fahrzeuginsassen des Fahrzeugs (1) angibt, in Übereinstimmung damit, dass der Scheibenwischersprühaktivator (20) aktiviert ist;
(S3) Detektieren des Signals, das eine beeinträchtigte Sichtbarkeit der Umgebung in einer ersten Richtung durch ein Fahrzeugfenster (30) für den Fahrzeuginsassen des Fahrzeugs (1) angibt; und
- (S4) Anzeigen eines Bilds der Umgebung in der ersten Richtung des Fahrzeugs (1), das durch eine erste Kamera (5a) erlangt wird, auf einer Anzeige (10a, 10b) für den Fahrzeuginsassen.

8. Verfahren nach einem des Anspruchs 7, wobei das Verfahren ferner Folgendes umfasst:
- (S1b) Bestimmen, ob eine Substanz auf dem Fahrzeugfenster (30) auftritt; und
- (S2b) Generieren des Signals, das eine beeinträchtigte Sichtbarkeit der Umgebung in einer ersten Richtung durch ein Fahrzeugfenster (30) für den Fahrzeuginsassen des Fahrzeugs (1) angibt, für die Verarbeitungsschaltung (102) in Übereinstimmung mit einer Bestimmung, dass eine Substanz auf dem Fahrzeugfenster (30) auftritt.

9. Verfahren nach einem der Ansprüche 7-8, wobei das Verfahren ferner Folgendes umfasst:
- (S7a) Beenden der Anzeige des Bilds der Umgebung in der ersten Richtung des Fahrzeugs (1), das durch die erste Kamera (5a) erlangt wird, für den Fahrzeuginsassen nach einer ersten vorbestimmten Zeitdauer (t1) bei Ausbleiben von Detektion eines Signals, das eine beeinträchtigte Sichtbarkeit der Umgebung in der ersten Richtung durch das Fahrzeugfenster (30) für den Fahrzeuginsassen des Fahrzeugs (1) angibt.

10. Verfahren nach einem der Ansprüche 7-9, wobei das Verfahren ferner Folgendes umfasst:
- (S7b) Beenden der Anzeige des Bilds der Umgebung in der ersten Richtung des Fahrzeugs (1), das durch die erste Kamera (5a) erlangt wird, für den Fahrzeuginsassen bei Ausbleiben von Detektion eines Signals, das eine beeinträchtigte Sichtbarkeit der Umgebung in der ersten Richtung durch das Fahrzeugfenster (30) für den Fahrzeuginsassen des Fahrzeugs (1) angibt.

11. Verfahren nach einem der Ansprüche 7-10, wobei das Verfahren ferner Folgendes umfasst:
- (S5) Initiieren eines Bildalarmsignals, das angibt, das ein Bild der Umgebung in der ersten Richtung des Fahrzeugs (1) auf der Anzeige (10a, 10b) angezeigt wird.

12. Verfahren nach einem der Ansprüche 7-11, wobei das Verfahren ferner Folgendes umfasst:
- (S6) Initiieren eines Signals für verbleibende Zeit, das die Zeit angibt, für die das Bild der Umgebung in der ersten Richtung des Fahrzeugs (1), das durch die erste Kamera (5a) erlangt wird, auf der Anzeige (10a, 10b) angezeigt werden wird.

13. Computerprogrammprodukt (500), umfassend ein nicht transitorisches computerlesbares Medium, das darauf ein Computerprogramm, das Programmanweisungen umfasst, aufweist, wobei das Computerprogramm in eine Verarbeitungsschaltung (102) ladbar und dazu konfiguriert ist, eine Ausführung des Verfahrens nach einem der Ansprüche 7 bis 12 zu veranlassen, wenn das Computerprogramm durch die mindestens eine Verarbeitungsschaltung (102) ausgeführt wird.

## Revendications

1. Système d'aide à la vision (100) au niveau d'un véhicule (1) pour aider un occupant de véhicule à voir l'environnement du véhicule (1), le système d'aide à la vision (100) comprenant :
une première caméra (5a) configurée pour obtenir une image de l'environnement dans une première direction du véhicule (1) ;
un dispositif d'affichage (10a,10b) configuré pour afficher l'image de l'environnement dans la première direction du véhicule (1) obtenue par la première caméra (5a) ;
un activateur de pulvérisation de lave-glace (20) configuré pour activer la pulvérisation d'un liquide sur la vitre de véhicule (30) ; et
une circuiterie de traitement (102) connectée de manière fonctionnelle à la première caméra (5a), au dispositif d'affichage (10a,10b) et à l'activateur de pulvérisation de lave-glace (20), la circuiterie de traitement (102) étant configurée pour :
- la détermination du fait que l'activateur de pulvérisation de lave-glace (20) est activé ou désactivé ;
- la génération d'un signal vers la circuiterie de traitement (102) indicatif d'une visibilité réduite de l'environnement dans la première direction à travers la vitre de véhicule (30) pour l'occupant de véhicule du véhicule (1) conformément au fait que l'activateur de pulvérisation de lave-glace (20) est activé ;
- la détection du signal indicatif d'une visibilité réduite de l'environnement dans une première direction à travers une vitre de véhicule (30) pour l'occupant de véhicule du véhicule (1) ; et
- l'affichage de l'image de l'environnement dans la première direction du véhicule (1), obtenue par la première caméra (5a) au niveau du dispositif d'affichage (10a,10b), pour l'occupant de véhicule.

2. Système d'aide à la vision (100) selon la revendication 1, dans lequel le système d'aide à la vision (100) comprend en outre :
un capteur (4) configuré pour détecter l'apparition d'une substance sur la vitre de véhicule (30) qui provoque une visibilité réduite de l'environnement dans une première direction à travers la vitre de véhicule (30) pour l'occupant de véhicule du véhicule (1), dans lequel le capteur (4) est connecté de manière fonctionnelle à la circuiterie de traitement (102), et la circuiterie de traitement (102) est en outre configurée pour :
- la détermination du fait qu'une substance apparaît sur la vitre de véhicule (30) ; et
- la génération du signal vers la circuiterie de traitement (102) indicatif d'une visibilité réduite de l'environnement dans une première direction à travers une vitre de véhicule (30) pour l'occupant de véhicule du véhicule (1) conformément à une détermination qu'une substance apparaît sur la vitre de véhicule (30).

3. Système d'aide à la vision (100) selon l'une quelconque des revendications précédentes, dans lequel la circuiterie de traitement (102) est en outre configurée pour :
- l'arrêt de l'affichage de l'image de l'environnement dans la première direction du véhicule (1), obtenue par la première caméra (5a), pour l'occupant de véhicule après une première période de temps prédéterminée (t1) en l'absence de détection d'un signal indicatif d'une visibilité réduite de l'environnement dans la première direction à travers la vitre de véhicule (30) pour l'occupant de véhicule du véhicule (1).

4. Système d'aide à la vision (100) selon l'une quelconque des revendications précédentes, dans lequel la circuiterie de traitement (102) est en outre configurée pour :
- l'arrêt de l'affichage de l'image de l'environnement dans la première direction du véhicule (1), obtenue par la première caméra (5a), pour l'occupant de véhicule en l'absence de détection d'un signal indicatif d'une visibilité réduite de l'environnement dans la première direction à travers la vitre de véhicule (30) pour l'occupant de véhicule du véhicule (1).

5. Système d'aide à la vision (100) selon l'une quelconque des revendications précédentes, dans lequel la circuiterie de traitement (102) est en outre configurée pour :
- le déclenchement d'un signal d'alerte d'image indicatif du fait qu'une image de l'environnement dans la première direction du véhicule (1) est affichée au niveau du dispositif d'affichage (10a,10b).

6. Système d'aide à la vision (100) selon l'une quelconque des revendications précédentes, dans lequel la circuiterie de traitement (102) est en outre configurée pour :
- le déclenchement d'un signal de temps restant indicatif du temps pendant lequel l'image de l'environnement dans la première direction du véhicule (1), obtenue par la première caméra (5a), sera affichée au niveau du dispositif d'affichage (10a,10b).

7. Procédé pour aider un occupant de véhicule à voir l'environnement d'un véhicule (1), le procédé comprenant :
- (S1a) la détermination du fait qu'un activateur de pulvérisation de lave-glace (20) est activé ou désactivé ;
- (S2a) la génération d'un signal vers la circuiterie de traitement (102) indicatif d'une visibilité réduite de l'environnement dans la première direction à travers la vitre de véhicule (30) pour l'occupant de véhicule du véhicule (1), conformément au fait que l'activateur de pulvérisation de lave-glace (20) est activé ;
(S3) la détection du signal indicatif d'une visibilité réduite de l'environnement dans une première direction à travers une vitre de véhicule (30) pour l'occupant de véhicule du véhicule (1) ; et
- (S4) l'affichage d'une image de l'environnement dans la première direction du véhicule (1), obtenue par une première caméra (5a) au niveau d'un dispositif d'affichage (10a,10b), pour l'occupant de véhicule.

8. Procédé selon la revendication 7, le procédé comprenant en outre :
- (S1b) la détermination du fait qu'une substance apparaît sur la vitre de véhicule (30) ; et
- (S2b) la génération du signal vers la circuiterie de traitement (102) indicatif d'une visibilité réduite de l'environnement dans une première direction à travers une vitre de véhicule (30) pour l'occupant de véhicule du véhicule (1) conformément à une détermination qu'une substance apparaît sur la vitre de véhicule (30).

9. Procédé selon l'une quelconque des revendications 7 à 8, le procédé comprenant en outre :
- (S7a) l'arrêt de l'affichage de l'image de l'environnement dans la première direction du véhicule (1), obtenue par la première caméra (5a), pour l'occupant de véhicule après une première période de temps prédéterminée (t1) en l'absence de détection d'un signal indicatif d'une visibilité réduite de l'environnement dans la première direction à travers la vitre de véhicule (30) pour l'occupant de véhicule du véhicule (1).

10. Procédé selon l'une quelconque des revendications 7 à 9, le procédé comprenant en outre :
- (S7b) l'arrêt de l'affichage de l'image de l'environnement dans la première direction du véhicule (1), obtenue par la première caméra (5a), pour l'occupant de véhicule en l'absence de détection d'un signal indicatif d'une visibilité réduite de l'environnement dans la première direction à travers la vitre de véhicule (30) pour l'occupant de véhicule du véhicule (1).

11. Procédé selon l'une quelconque des revendications 7 à 10, le procédé comprenant en outre :
- (S5) le déclenchement d'un signal d'alerte d'image indicatif du fait qu'une image de l'environnement dans la première direction du véhicule (1) est affichée au niveau du dispositif d'affichage (10a,10b).

12. Procédé selon l'une quelconque des revendications 7 à 11, le procédé comprenant en outre :
- (S6) le déclenchement d'un signal de temps restant indicatif du temps pendant lequel l'image de l'environnement dans la première direction du véhicule (1), obtenue par la première caméra (5a), sera affichée au niveau du dispositif d'affichage (10a,10b).

13. Produit de programme informatique (500) comprenant un support lisible par ordinateur non transitoire, ayant sur celui-ci un programme informatique comprenant des instructions de programme, le programme informatique pouvant être chargé dans une circuiterie de traitement (102) et configuré pour provoquer l'exécution du procédé selon l'une quelconque des revendications 7 à 12 lorsque le programme informatique est exécuté par l'au moins une circuiterie de traitement (102).
